# FASCICULE DE BREVET EUROPEEN

(11) **EP 1 435 815 B1**
(45) Date de publication et mention de la délivrance du brevet: **04.01.2006**
(21) Numéro de dépôt: 02801353.0
(22) Date de dépôt: 30.09.2002
(51) Int. Cl.: A47J 37/12

(54) **APPAREIL DE CUISSON A CUVE COMPORTANT UN DISPOSITIF DE VIDANGE A SECURITE THERMIQUE**
KOCHGERÄT MIT EINEM GEFÄSS, UMFASSEND EINE ABLASSVORRICHTUNG MIT EINEM WÄRMESICHERHEITSVENTIL
COOKING APPLIANCE WITH A VESSEL COMPRISING A DRAINING DEVICE WITH A THERMAL SAFETY VALVE

(30) Priorité: 17.10.2001 FR 0113397
(43) Date de publication de la demande: 14.07.2004
(73) Titulaire: SEB S.A., 69130 Ecully (FR)
(72) Inventeur: BEUGNOT, Bernard, F-21120 Is-sur-Tille (FR); FEDERICO, Dominique, F-21121 Ahuy (FR); BIZARD, Jean-Claude, F-21121 Fontaine-les-Dijon (FR)
(74) Mandataire: Kiehl, Hubert
(86) Numéro de dépôt international: PCT/FR2002/003329
(87) Numéro de publication internationale: WO 2003/032794

(56) Documents cités:
- EP-A- 0 267 323
- DE-A- 19 907 150
- DE-U- 9 315 764
- GB-A- 661 921
- US-A- 2 752 930
- US-A- 3 845 702

## Description

La présente invention se rapporte au domaine technique général des appareils de cuisson comportant une cuve prévue pour recevoir un bain de cuisson. La présente invention concerne plus particulièrement les appareils du type précité comprenant un dispositif de vidange du bain de cuisson contenu dans la cuve.

La présente invention concerne notamment, mais non exclusivement, les friteuses. En effet le bain de cuisson n'est pas limité à un bain d'huile ou de matière grasse fondue, mais peut également consister en toute matière alimentaire suffisamment fluide pour s'écouler par un dispositif de vidange, et en particulier un liquide à base d'eau.

Il est connu des documents US 2 597 695, CH 325 786 et FR 2 665 068 des friteuses comportant un conduit de vidange. Toutefois aucun réceptacle de collecte de l'huile n'est prévu. Le document FR 2 773 976 décrit une friteuse comportant un conduit de vidange et un réceptacle supporté par un tiroir monté dans le boîtier de l'appareil. L'utilisation de tels appareils nécessite une grande attention de la part de l'utilisateur du fait de la vidange de l'huile hors du boîtier.

Il est connu du document US 2 867 164 une friteuse de type industriel comportant une cuve et un réceptacle de vidange logés dans un bâti. La cuve comporte un conduit de vidange fermé par une vanne. Le réceptacle de vidange est monté de manière amovible sur la face intérieure d'une porte du bâti. La transposition d'une telle réalisation dans un appareil domestique apparaît peu sécurisante.

Il est connu du document DE 1 99 07 150 un appareil de cuisson dont la cuve comporte un conduit de vidange équipé d'un clapet motorisé. Le dispositif de commande du moteur peut comporter un capteur de température permettant d'éviter la vidange de la cuve tant que la température du contenu de la cuve est trop élevée. Une telle construction est envisageable pour un appareil industriel ou professionnel mais s'avère très onéreuse pour un appareil domestique.

L'objet de la présente invention est d'augmenter la sécurité des appareils de cuisson comportant une cuve munie d'un dispositif de vidange.

Un autre objet de la présente invention est de proposer un appareil du type précité dont la construction soit compacte et économique.

Ces objets sont atteints avec un appareil de cuisson comme défini dans la revendication 1 comportant dans un boîtier une cuve prévue pour recevoir un bain de cuisson, munie d'un dispositif de vidange prévu pour un déversement du contenu de la cuve dans un réceptacle de vidange agencé de manière amovible par rapport au boîtier, du fait que le dispositif de vidange comporte un clapet thermostatique comprenant un organe mécanique thermosensible mobile en fonction de la température. L'organe mécanique thermosensible est par exemple une pièce bimétallique, une pièce en alliage à mémoire de forme ou un piston à cire. Grâce à l'organe mécanique mobile en fonction de la température, le clapet thermostatique peut présenter une configuration ouverte ou une configuration fermée en fonction du niveau de la température. Ainsi la vidange du contenu de la cuve peut être empêchée tant que la température du bain de cuisson dépasse un certain seuil. Cette disposition permet d'améliorer la sécurité de l'appareil en limitant les risques de brûlure lors de la manipulation du réceptacle de vidange. De plus, des matériaux moins nobles et donc moins onéreux peuvent être utilisés pour la réalisation du réceptacle de vidange, tel que par exemple du polypropylène. Le réceptacle de vidange peut être disposé dans le boîtier ou encore former un socle sur lequel repose le boîtier. La cuve peut être amovible et passer au lave-vaisselle. Le clapet thermostatique du dispositif de vidange permet de réaliser une sécurité indépendante d'une commande d'ouverture et de fermeture manoeuvrée par l'utilisateur. De plus, une telle construction est peu onéreuse, aucun moteur n'étant nécessaire pour actionner le clapet thermostatique.

Avantageusement, le clapet thermostatique est agencé dans un conduit débouchant dans le fond de la cuve. Cette disposition permet de faciliter la vidange.

Avantageusement, un filtre est agencé en amont du clapet thermostatique.

Cette disposition permet d'éviter que des résidus présents dans le bain de cuisson affectent le fonctionnement du clapet thermostatique. Cette disposition permet également d'améliorer la qualité du bain de cuisson lors de fritures successives avec le même bain.

Selon un mode de réalisation, le clapet thermostatique comporte une coupelle bimétallique à retournement. D'autres modes de réalisation sont également envisageables, par exemple un clapet thermostatique comportant un piston à cire ou encore une pièce en alliage à mémoire de forme.

Avantageusement, le dispositif de vidange comporte un deuxième clapet comprenant une pièce mobile d'obturation manoeuvrée au moyen d'un bouton de manoeuvre. Cette disposition permet à l'utilisateur de contrôler la vidange.

Avantageusement alors le clapet thermostatique est agencé entre la cuve et le deuxième clapet. Cette disposition permet d'envisager un contact thermique entre le bain de cuisson et l'organe mobile en fonction de la température appartenant au clapet thermostatique. Il en résulte une réaction plus rapide du clapet tant lors de la montée en température du bain de cuisson que lors du refroidissement.

Avantageusement alors le bouton de manoeuvre entraîne la pièce mobile d'obturation par l'intermédiaire d'un mécanisme de commande monté sur le réceptacle de vidange. Ainsi, en l'absence du réceptacle de vidange l'utilisateur ne risque pas de procéder à une vidange de l'appareil. De plus, le montage du mécanisme de commande sur le réceptacle de vidange facilite la réalisation d'une cuve amovible. Le réceptacle de vidange peut être disposé dans le boîtier ou encore former un socle sur lequel repose le boîtier.

Avantageusement, le bouton de manoeuvre entraînant le mécanisme de commande est monté sur le réceptacle de vidange. Cette disposition permet de simplifier la construction. En alternative, le bouton de manoeuvre peut par exemple être monté sur le boîtier.

Avantageusement, le boîtier comporte une ouverture latérale dans laquelle peut être inséré au moins partiellement le réceptacle de vidange. Cette disposition permet de faciliter la manipulation du réceptacle de vidange. En alternative, le boîtier peut par exemple être réalisé en deux parties, une partie supérieure entourant au moins partiellement la cuve, et une partie inférieure supportant le réservoir de vidange, la partie supérieure étant retirée pour accéder au réservoir de vidange.

Avantageusement alors, le bouton de manoeuvre est monté sur une face latérale extérieure du réceptacle de vidange. Cette disposition permet de simplifier la construction. En alternative, le bouton de manoeuvre peut par exemple être accessible par une trappe ménagée sur une face du boîtier.

Avantageusement la cuve est amovible par rapport au boîtier.

L'invention sera mieux comprise à l'étude de l'exemple de réalisation suivant, pris à titre nullement limitatif, illustré dans les figures annexées, dans lesquelles :
- la figure 1 est une vue montrant un appareil de cuisson selon l'invention dans la position prévue pour la vidange du contenu de la cuve, le boîtier extérieur étant représenté en pointillés,
- la figure 2 est une vue partielle de l'appareil montré à la figure 1, dans une position après la vidange de la cuve, montrant le dispositif de sécurité prévu pour éviter deux vidanges consécutives sans retrait du réceptacle de vidange,
- la figure 3 est une vue partielle en coupe transversale de l'appareil montré à la figure 1, dans une position après la vidange de la cuve,
- la figure 4 est une vue partielle en coupe transversale de l'appareil montré à la figure 1, dans la position prévue pour la vidange du contenu de la cuve.

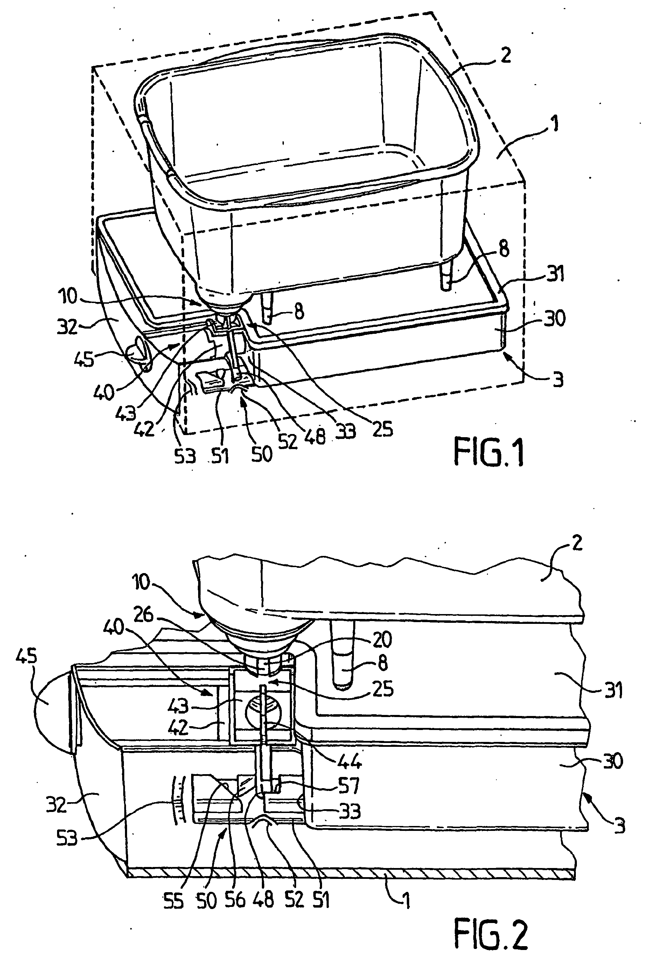

L'appareil illustré aux figures 1 à 4 est une friteuse comportant un boîtier 1 présentant une ouverture supérieure recevant une cuve 2 prévue pour recevoir un liquide de cuisson. L'ouverture supérieure peut être fermée par un couvercle, non représenté aux figures. Le boîtier 1 présente également une ouverture latérale dans laquelle est engagé un réceptacle de vidange 3.

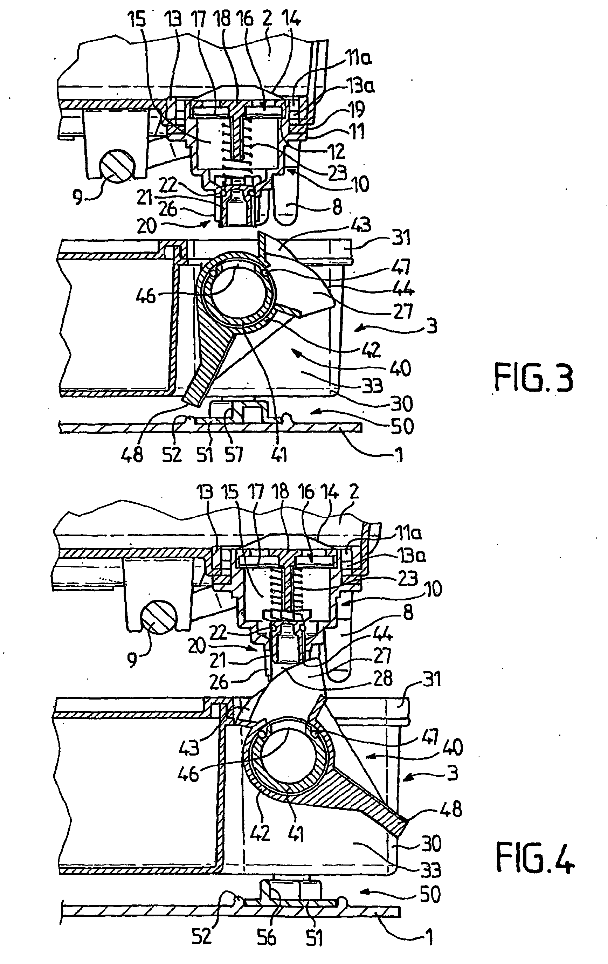

Tel que mieux visible aux figures 3 et 4, la cuve 2 comporte un dispositif de vidange 10. La cuve 2 est avantageusement amovible et comporte des moyens, tels que des pieds 8, prévus pour permettre de poser la cuve sur un plan de travail. Si désiré, des moyens de chauffage électriques 9 peuvent être fixés sous la cuve 2. A titre de variante, les moyens de chauffage électriques peuvent être agencés dans le boîtier 1 ou encore dans la cuve 2.

Le dispositif de vidange 10 comprend un conduit d'évacuation 15 issu du fond de la cuve 2. Le conduit 15 est protégé par un filtre 14. Un clapet à ressort 20 obture la partie inférieure du conduit 15. Un clapet thermostatique 16 est agencé entre le filtre 14 et le clapet à ressort 20.

Le conduit 15 est formé par un corps 11 avantageusement réalisé en une matière plastique résistante aux températures élevées du bain de cuisson, par exemple de l'Amodel résistant jusqu'à 250°C dans le cas d'une friteuse. Le corps 11 est monté amovible par rapport à la cuve 2. Un joint 19 est interposé entre la cuve 2 et le corps 11. Le joint 19 est avantageusement solidaire du corps 11 pour éviter une perte lors du démontage du dispositif de vidange ou un oubli lors du remontage dudit dispositif.

Le filtre 14 est monté amovible par rapport à la cuve 2 et au corps 11. Selon l'exemple de réalisation illustré aux figures, le filtre 14 est solidaire d'une couronne 13 assemblée par baïonnette avec le corps 11. La couronne 13 est logée de manière amovible dans un renfoncement du fond de la cuve 2. La couronne 13 est immobilisée en rotation par rapport à la cuve 2. La partie supérieure du corps 11 est engagée dans une ouverture ménagée dans le fond de la cuve 2, et porte des rampes 11 a coopérant avec des rampes 13a de la couronne 13 pour former l'assemblage par baïonnette.

Le clapet thermostatique 16 comprend une coupelle bimétallique à retournement 17 fixée sur la face inférieure d'une plaque perforée 18 obturant l'extrémité supérieure du corps 11. La plaque 18 est par exemple sertie à l'intérieur du corps 11.

La coupelle bimétallique à retournement 17 forme un organe mécanique thermosensible mobile en fonction de la température. La coupelle 17 est représentée aux figures 3 et 4 en position ouverte correspondant à la position basse température. La coupelle 17 en position haute température obture le conduit 15. La température de transition entre la position haute température et la position basse température lors du refroidissement est par exemple de l'ordre de 90°C dans le cas d'une friteuse.

A titre d'exemple, cette coupelle est réalisée à partir un laminé bimétallique et présente un diamètre de 30 mm. En position fermée, la coupelle 17 est incurvée vers le bas et sa périphérie vient en appui contre un épaulement annulaire interne 12 du corps 11. Le clapet 16 est donc fermé. En position ouverte, la coupelle 17 est incurvée dans l'autre sens, donc vers le haut, et ménage un passage vers les orifices de la plaque perforée 18. Le liquide peut alors traverser le clapet thermostatique 16.

Le clapet à ressort 20 comporte une pièce mobile d'obturation 21 équipée d'un joint périphérique torique 22. La pièce 21 est montée sur un ressort 23 s'appuyant contre la face inférieure de la coupelle 17. La position de repos du ressort 23 correspond à la figure 3 dans laquelle le clapet à ressort 20 est fermé.

Le réceptacle de vidange 3 présente un volume suffisant pour recevoir le bain de cuisson contenu dans la cuve 2. Le réceptacle de vidange 3 comprend un bac récupérateur 30 fermé par un couvercle 31. Le réceptacle de vidange 3 présente une face latérale extérieure 32. Si désiré, la face 32 peut être réalisée au moins partiellement en matériau transparent ou translucide pour permettre à l'utilisateur de voir le remplissage du réceptacle de vidange 3.

Le réceptacle de vidange 3 comprend également un mécanisme de commande 40 de la vidange, avantageusement monté sur le bac récupérateur 30. Le mécanisme de commande 40 comprend une pièce mobile de commande 42 montée autour d'un conduit d'admission 41 débouchant dans une paroi latérale 33 du bac 30. La pièce mobile de commande 42 présente un entonnoir 43 et une came 44 prévue pour actionner le clapet à ressort 20. La pièce mobile de commande 42 est reliée à un bouton de manoeuvre 45 monté sur la face latérale extérieure 32 du réceptacle de vidange 3. Le bouton de manoeuvre 45 entraîne la pièce 42 en rotation. La paroi latérale du conduit 41 présente une ouverture de remplissage 46 entourée par un joint torique 47 de manière à assurer une étanchéité entre le conduit 41 et la pièce mobile de commande 42. Le bouton de manoeuvre 45 est mobile entre une position dite d'utilisation correspondant aux figures 2 et 3 et une position dite de vidange correspondant aux figures 1 et 4. Dans la position de vidange, tel que mieux visible à la figure 4, l'entonnoir 43 est disposé au dessus de l'ouverture de remplissage 46, et la came 44 repousse le clapet 20.

L'appareil comporte un dispositif de sécurité 25 destiné à empêcher le retrait du réceptacle de vidange 3 lorsque le clapet 20 est ouvert. A cet effet l'extrémité inférieure du conduit 15 présente une fente longitudinale 26 et la came 44 agencée en partie dans l'entonnoir 43 vient s'insérer dans la fente 26 lors de la rotation de la pièce mobile de commande 42 vers la position de vidange, tel que montré à la figure 4. Le mécanisme de commande 40 comporte ainsi un pêne 27 prévu pour coopérer avec une gâche 28 appartenant au clapet 20 lorsque le clapet est amené en position ouverte, le pêne 27 étant formé par une face latérale de la came 44, la gâche 28 étant formée par la fente 26.

L'appareil comporte un autre dispositif de sécurité 50 destiné à empêcher deux vidanges consécutives.

A cet effet une pièce mobile de sécurité 51 est agencée entre le boîtier 1 et le réceptacle de vidange 3. La pièce 51 est guidée en translation longitudinale par des butées de guidage 52. Le mouvement longitudinal de la pièce 51 est limité par des butées d'arrêt 53. Une lame flexible supérieure montée sur la pièce 51 est prévue pour venir en butée contre le réceptacle de vidange 3 lors de la mise en place dudit réceptacle dans le boîtier 1, puis pour prendre appui contre le réceptacle de vidange 3 lorsque la pièce 51 est bloquée par l'une des butées 53.

La pièce 51 comporte une première came 55 prévue pour coopérer avec une patte 48 issue de la pièce mobile de commande 42 lorsque le bouton de manoeuvre 45 est amené en position de vidange après la mise en place du réceptacle de vidange 3. La pièce 51 comporte une deuxième came 56 prévue pour coopérer avec la patte 48 lorsque le bouton de manoeuvre 45 est ramené en position d'utilisation après une vidange. La pièce 51 comporte une butée de blocage 57 prévue pour bloquer la rotation de la pièce mobile de commande 42 lorsque le bouton de manoeuvre 45 est ramené vers ta position de vidange après une nouvelle utilisation sans retrait du réceptacle de vidange 3.

La présente réalisation fonctionne de la manière suivante.

Lorsque la cuve 2 est en place dans le boîtier 1, l'appareil est prêt pour une cuisson. Lorsque le réceptacle de vidange 3 est en place dans le boîtier 1, l'utilisateur peut commander la vidange au moyen du bouton de manoeuvre 45. La came 44 vient s'insérer dans la fente 26 et repousse la pièce mobile d'obturation 21 du clapet 20.

Toutefois selon l'invention la vidange ne peut intervenir tant que la coupelle bimétallique à retournement 17 est en position haute température. Le clapet thermostatique 16 est alors en position fermée. Lorsque la température de la coupelle 17 en contact avec le liquide a atteint le seuil de retournement, le clapet thermostatique 16 s'ouvre.

La température d'ouverture du clapet thermostatique 16 au refroidissement permet de choisir pour le réceptacle de vidange et/ou le mécanisme de commande des matériaux dont la tenue à la température est limitée. De plus les risques de brûlure lors de manipulation du réceptacle de vidange 3 sont réduits.

Le clapet à ressort 20 permet d'interdire la vidange si le réceptacle de vidange 3 n'est pas en place dans le boîtier 1. Lorsque le réceptacle de vidange 3 est en place, l'utilisateur tourne le bouton de manoeuvre 45 et la came 44 repousse la pièce mobile 21 du clapet 20. Le contenu de la cuve peut alors s'écouler dans le réceptacle de vidange 3 si le clapet thermostatique 16 est en position ouverte.

Le dispositif de sécurité 25 permet d'éviter le retrait du réceptacle de vidange 3 du boîtier 1 grâce à l'insertion du pêne 27 dans la gâche 28 lorsque le mécanisme de commande 40 est en position de vidange, la came 44 repoussant la pièce mobile 21 du clapet 20.

Le dispositif de sécurité 50 interdit de procéder à une deuxième vidange si le réceptacle de vidange 3 n'a pas été retiré au moins partiellement du boîtier 1 puis remis en place, grâce aux déplacements de la pièce 51 lors de la manoeuvre du dispositif de commande 40 de la position d'utilisation vers la position de vidange et retour, ainsi que lors du retrait puis de la remise en place du réceptacle de vidange 3.

A titre de variante, le mécanisme de commande 40 de la vidange peut ne pas être solidaire du bac récupérateur 30, et par exemple être monté sur le couvercle 31 du réceptacle de vidange 3.

A titre de variante, le bouton de manoeuvre 45 peut être monté sur une face latérale du réceptacle de vidange logée à l'intérieur du boîtier lorsque ledit réceptacle est en place dans le boîtier. Le bouton de manoeuvre peut alors être accessible par une trappe ménagée dans la paroi latérale du boîtier.

A titre de variante, le bouton de manoeuvre 45 peut être monté sur le boîtier 1 de l'appareil, par exemple à l'opposé de la fenêtre latérale du boîtier permettant l'insertion du réceptacle de vidange. La connexion entre le bouton de manoeuvre et le mécanisme de commande se fait lors de l'insertion du réceptacle de vidange dans le boîtier.

A titre de variante, le réceptacle de vidange 3 peut former un socle recevant de manière amovible le boîtier entourant la cuve.

La présente invention n'est nullement limitée à l'exemple de réalisation décrit et à ses variantes, mais englobe de nombreuses modifications dans le cadre des revendications.

## Revendications

1. Appareil de cuisson comportant une cuve (2) prévue pour recevoir un bain de cuisson, munie d'un dispositif de vidange (10) prévu pour un déversement du contenu de la cuve (2), **caractérisé en ce que** la cuve (2) est montée dans un boîtier (1), le dispositif de vidange (10) étant prévu pour un déversement du contenu de la cuve (2) dans un réceptacle de vidange (3) agencé de manière amovible par rapport au boîtier (1), le dispositif de vidange (10) comportant un clapet thermostatique (16) comprenant un organe mécanique thermosensible mobile en fonction de la température de telle sorte qu'il empêche la vidange tant que la température du bain depasse un certain seuil et ouvre le clapet lorsque le bain a atteint le seuil de retournement.

2. Appareil de cuisson selon la revendication 1, **caractérisé en ce que** le clapet thermostatique (16) est agencé dans un conduit (15) débouchant dans le fond de la cuve (2).

3. Appareil de cuisson selon l'une des revendications 1 ou 2, **caractérisé en ce qu'**un filtre (14) est agencé en amont du clapet thermostatique (16).

4. Appareil de cuisson selon l'une des revendications 1 à 3, **caractérisé en ce que** le clapet thermostatique (16) comporte une coupelle bimétallique à retournement (17).

5. Appareil de cuisson selon l'une des .revendications 1 à 4, **caractérisé en ce que** le dispositif de vidange (10) comporte un deuxième clapet (20) comprenant une pièce mobile d'obturation (21) manoeuvrée au moyen d'un bouton de manoeuvre (45).

6. Appareil de cuisson selon la revendication 5, **caractérisé en ce que** le clapet thermostatique (16) est agencé entre la cuve (2) et le deuxième clapet (20).

7. Appareil de cuisson selon la revendication 6, **caractérisé en ce que** le bouton de manoeuvre (45) entraîne la pièce mobile d'obturation (21) par l'intermédiaire d'un mécanisme de commande (40) monté sur le réceptacle de vidange (3).

8. Appareil de cuisson selon la revendication 7, **caractérisé en ce que** le bouton de manoeuvre (45) entraînant le mécanisme de commande (40) est monté sur le réceptacle de vidange (3).

9. Appareil de cuisson selon l'une des revendications 1 à 8, **caractérisé en ce que** le boîtier (1) comporte une ouverture latérale dans laquelle peut être inséré au moins partiellement le réceptacle de vidange (3).

10. Appareil de cuisson selon la revendication 8, **caractérisé en ce que** le boîtier (1) comporte une ouverture latérale dans laquelle peut être inséré au moins partiellement le réceptacle de vidange (3) et **en ce que** le bouton de manoeuvre (45) est monté sur une face latérale extérieure (32) du réceptacle de vidange (3).

11. Appareil de cuisson selon l'une des revendications 1 à 10, **caractérisé en ce que** la cuve (2) est amovible par rapport au boîtier (1).

## Patentansprüche

1. Gargerät mit einer Wanne (2), die für die Aufnahme eines Garbads vorgesehen und mit einer Entleerungsvorrichtung (10) versehen ist, welche für ein Abfließen des Inhalts der Wanne (2) vorgesehen ist, **dadurch gekennzeichnet, dass** die Wanne (2) in einem Gehäuse (1) angebracht ist, wobei die Entleerungsvorrichtung (10) für ein Abfließen des Inhalts der Wanne (2) in einen Auffangbehälter (3) vorgesehen ist, der bezüglich des Gehäuses (1) abnehmbar angebracht ist, wobei die Entleerungsvorrichtung (10) ein thermostatisches Ventilelement (16) aufweist, das ein mechanisches, wärmeempfindliches Organ aufweist, welches in Abhängigkeit von der Temperatur so beweglich ist, dass es das Entleeren verhindert, solange die Temperatur des Bads einen bestimmten Schwellenwert überschreitet, und das Ventilelement öffnet, wenn das Bad den Schwellenwert für ein Umspringen erreicht hat.

2. Gargerät nach Anspruch 1, **dadurch gekennzeichnet, dass** das thermostatische Ventilelement (16) in einer Leitung (15) angeordnet ist, die in den Boden der Wanne (2) mündet.

3. Gargerät nach Anspruch 1 oder 2, **dadurch gekennzeichnet, dass** stromaufwärts des thermostatischen Ventilelements (16) ein Filter (14) angeordnet ist.

4. Gargerät nach einem der Ansprüche 1 bis 3, **dadurch gekennzeichnet, dass** das thermostatische Ventilelement (16) eine Bimetall-Umspringschale (17) aufweist.

5. Gargerät nach einem der Ansprüche 1 bis 4, **dadurch gekennzeichnet, dass** die Entleerungsvorrichtung (10) ein zweites Ventilelement (20) mit einem beweglichen Verschlussteil (21) aufweist, welches mit Hilfe eines Betätigungsknopfes (45) betätigt wird.

6. Gargerät nach Anspruch 5, **dadurch gekennzeichnet, dass** das thermostatische Ventilelement (16) zwischen der Wanne (2) und dem zweiten Ventilelement (20) angeordnet ist.

7. Gargerät nach Anspruch 6, **dadurch gekennzeichnet, dass** der Betätigungsknopf (45) das bewegliche Verschlussteil (21) über einen am Auffangbehälter (3) angebrachten Steuermechanismus (40) antreibt.

8. Gargerät nach Anspruch 7, **dadurch gekennzeichnet, dass** der Betätigungsknopf (45), der den Steuermechanismus (40) antreibt, am Auffangbehälter (3) angebracht ist.

9. Gargerät nach einem der Ansprüche 1 bis 8, **dadurch gekennzeichnet, dass** das Gehäuse (1) eine Seitenöffnung aufweist, in die der Auffangbehälter (3) zumindest teilweise eingesetzt sein kann.

10. Gargerät nach Anspruch 8, **dadurch gekennzeichnet, dass** das Gehäuse (1) eine Seitenöffnung aufweist, in die der Auffangbehälter (3) zumindest teilweise eingesetzt sein kann, und dass der Betätigungsknopf (45) an einer äußeren Seitenfläche (32) des Auffangbehälters (3) angebracht ist.

11. Gargerät nach einem der Ansprüche 1 bis 10, **dadurch gekennzeichnet, dass** die Wanne (2) bezüglich des Gehäuses (1) abnehmbar ist.

## Claims

1. A cooking appliance having a vessel (2) designed to receive a cooking bath and provided with a drain device (10) designed to drain off the contents of the vessel (2), said cooking appliance being **characterized in that** the vessel (2) is mounted in a housing (1), the drain device (10) being designed to drain off the contents of the vessel (2) into a drain receptacle (3) arranged removably relative to the housing (1), the drain device (10) having a thermostatic valve (16) including a temperature-sensitive mechanical member that is movable as a function of temperature, so that it prevents draining from taking place so long as the temperature of the bath exceeds a certain threshold, and so that it opens the valve when the bath has cooled to the reversal threshold.

2. A cooking appliance according to claim 1, **characterized in that** the thermostatic valve (16) is arranged in a duct (15) opening out in the bottom of the vessel (2).

3. A cooking appliance according to claim 1 or claim 2, **characterized in that** a filter (14) is arranged upstream from the thermostatic valve (16).

4. A cooking appliance according to any one of claims 1 to 3, **characterized in that** the thermostatic valve (16) includes a reversing bimetallic dish-shaped washer (17).

5. A cooking appliance according to any one of claims 1 to 4, **characterized in that** the drain device (10) has a second valve (20) including a moving closure piece (21) that is controlled by means of control knob (45).

6. A cooking appliance according to claim 5, **characterized in that** the thermostatic valve (16) is arranged between the vessel (2) and the second valve (20).

7. A cooking appliance according to claim 6, **characterized in that** the control knob (45) drives the moving closure piece (21) via a control mechanism (40) mounted on the drain receptacle (3).

8. A cooking appliance according to claim 7, **characterized in that** the control knob (45) driving the control mechanism (40) is mounted on the drain receptacle (3).

9. A cooking appliance according to any one of claims 1 to 8, **characterized in that** the housing (1) is provided with a side opening into which the drain receptacle (3) can be inserted at least in part.

10. A cooking appliance according to claim 8, **characterized in that** the housing (1) is provided with a side opening into which the drain receptacle (3) can be inserted at least in part, and **in that** the control knob (45) is mounted on an outside side face (32) of the drain receptacle (3).

11. A cooking appliance according to any one of claims 1 to 10, **characterized in that** the vessel (2) is removable relative to the housing (1).
